(19) Europäisches Patentamt
European Patent Office
Office européen des brevets

(11) **EP 4 783 450 A1**

(12) **EUROPÄISCHE PATENTANMELDUNG**

(43) Veröffentlichungstag:
**29.07.2026 Patentblatt 2026/31**

(21) Anmeldenummer: **26152773.3**

(22) Anmeldetag: **19.01.2026**

(51) Internationale Patentklassifikation (IPC):
*H02P 3/22* (2006.01)    *B60L 7/18* (2006.01)
*H02P 6/24* (2006.01)    *H02P 21/36* (2016.01)

(52) Gemeinsame Patentklassifikation (CPC):
**H02P 21/36; B60L 7/18; H02P 3/22; H02P 6/24**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **24.01.2025 DE 102025102618**

(71) Anmelder: **Volkswagen Aktiengesellschaft
38440 Wolfsburg (DE)**

(72) Erfinder: **Wirsen-Gümüser, Bjarne
38440 Wolfsburg (DE)**

(54) **SCHALTUNGSANORDNUNG ZUR ANSTEUERUNG EINES WECHSELRICHTERS FÜR EINE ELEKTROMASCHINE IN EINEM HOCHVOLTNETZ, HOCHVOLTNETZ UND VERFAHREN ZUR ANSTEUERUNG EINES WECHSELRICHTERS**

(57) Die Erfindung betrifft eine Schaltungsanordnung (9) zur Ansteuerung eines Wechselrichters (4) für eine Elektromaschine (5) in einem Hochvoltnetz (1), die einen Prozessor (10), einen ersten Komparator (14) und einen zweiten Komparator (15) aufweist, wobei der erste Komparator (14) ein Schaltsignal für einen aktiven Kurzschluss (AKS) erzeugt, wenn eine Spannung (UDC) am Zwischenkreiskondensator (3) größer als eine feste erste Referenzspannung (Uref1) ist, wobei zweite Komparator (15) ein Schaltsignal für einen Freilauf (FL) erzeugt, wenn die Spannung (UDC) am Zwischenkreiskondensator (3) größer als eine zweite Referenzspannung (Uref2) ist, wobei der Prozessor (10) derart ausgebildet ist, ein mögliches maximales generatives Drehmoment ausgehend vom aktuellen Arbeitspunkt (AP) zu ermitteln, daraus eine mechanische Leistung ermittelt und in eine elektrische Leistung ($P_{DC}$) umgerechnet wird, wobei aus der elektrischen Leistung ($P_{DC}$) unter Berücksichtigung eines aktuellen Innenwiderstandes ($R_i$) und einer aktuellen Leerlaufspannung ($U_0$) der Hochvoltbatterie (2) die zweite Referenzspannung ($U_{ref2}$) ermittelt wird, ein Hochvoltnetz (1) und ein Verfahren.

Fig. 2

EP 4 783 450 A1

## Beschreibung

Die Erfindung betrifft eine Schaltungsanordnung zur Ansteuerung eines Wechselrichters für eine Elektromaschine in einem Hochvoltnetz, ein Hochvoltnetz zur Ansteuerung eines Wechselrichters und ein Verfahren zur Ansteuerung eines Wechselrichters.

Bei elektrischen Maschinen kann es erforderlich sein, bei einem Auftreten eines Fehlers in der elektrischen Maschine oder in einer die elektrische Maschine umfassenden Vorrichtung ein umgehendes Abschalten der sich im Betrieb befindlichen elektrischen Maschine zu ermöglichen. Ein derartiger Fehlerfall kann zum Beispiel vorliegen, wenn ein Lastabwurf (durch Öffnen der Schaltelemente bzw. Schütze an einer Hochvoltbatterie) auftritt oder wenn eine elektrische Maschine umfassende Vorrichtung, beispielsweise ein die elektrische Maschine als Traktionsmotor umfassendes Kraftfahrzeug, einen Fehlerzustand feststellt, beispielsweise infolge eines Bauteilausfalls, eines Software-Fehlers oder ähnlichen Fehlers. Für einen derartigen Abschaltvorgang ist es erforderlich, dass neben weiteren elektrischen Komponenten auch die elektrische Maschine in einen sicheren Zustand überführt wird. Dazu müssen Maßnahmen durchgeführt werden, welche insbesondere ein Herunterfahren einer Betriebsspannung der elektrischen Maschine bewirken. Dabei sind Sprünge im Drehmoment der elektrischen Maschine und/oder abrupte Bremsmomente zu vermeiden.

Zum Erreichen des sicheren Zustandes können insbesondere ein aktiver Kurzschluss oder ein Freilauf der elektrischen Maschine geschaltet werden. Welches dieser Mittel sich dabei eignet, kann von dem Maschinentyp der elektrischen Maschine abhängen, also zum Beispiel davon, ob es sich um eine Asynchronmaschine oder eine Synchronmaschine handelt. Aus dem Stand der Technik sind verschiedene Verfahren zum Schalten einer elektrischen Maschine in einen Freilauf oder in einen aktiven Kurzschluss bekannt.

In DE 10 2014 209 887 A1 wird ein Verfahren zum Schalten eines Wechselrichters eines elektrischen Antriebs eines Kraftfahrzeugs beschrieben. Dabei kann durch den Wechselrichter ein Freilauf-Betriebsmodus, ein Kurzschluss-Betriebsmodus und ein getakteter Betriebsmodus zum Betrieb der elektrischen Maschine eingestellt werden. Ein Umschalten zwischen den Betriebsmodi erfolgt dabei in Abhängigkeit eines ermittelten Spannungswerts und/oder eines ermittelten Stromwerts für den aktuellen Betriebsmodus, wobei ein Anpassungsvorgang in Abhängigkeit des ermittelten Spannungswerts und/oder des ermittelten Stromwerts zur Anpassung des Stroms und/oder Spannung in der elektrischen Maschine für den Zielbetriebsmodus erfolgt.

Dabei wird beim Übergang von dem Freilauf-Betriebsmodus in den Kurzschluss-Betriebsmodus zunächst ein Stromregler des Wechselrichters für eine kurze Zeit mit einer Stromsollwertvorgabe von null betrieben, wobei während dieser Zeit ein Spannungswert und/oder ein Stromwert für den aktuellen Betriebsmodus ermittelt werden. Innerhalb dieser Zeit kann die Spannung an der elektrischen Maschine stufenweise auf null gesenkt werden, wobei anschließend die Taktung des Wechselrichters mit einem Schalten des Wechselrichters in den Kurzschluss-Betriebsmodus beendet wird. Dadurch können Spannungsdifferenzen bzw. Stromdifferenzen zwischen dem aktuellen Betriebsmodus und dem Zielbetriebsmodus ausgeglichen werden und transiente Überströme bzw. Überspannungen reduziert oder verhindert werden.

DE 10 2013 226 560 A1 offenbart ein Verfahren für einen verbesserten Wechsel von einem Freilaufbetrieb in einen aktiven Kurzschluss einer elektrischen Maschine. Dabei wird der Wechsel von dem Freilauf in den aktiven elektrischen Kurzschluss solange verzögert, bis eine elektrische Spannung an den Anschlüssen der elektrischen Maschine einen vorbestimmten Wert aufweist. Auf diese Weise wird erreicht, dass das Umschalten in Abhängigkeit einer durch die bestimmte Spannung ermittelten Rotorlage erfolgen kann.

Aus der DE 10 2021 129 144 A1 ist ein Verfahren zum Betreiben einer elektrischen Schaltungsanordnung, umfassend eine elektrische Schaltung und eine elektrische Maschine, bekannt, wobei bei Erfüllung wenigstens eines Auslösekriteriums die elektrische Maschine über die elektrische Schaltung in einen Freilauf geschaltet wird, wonach in Abhängigkeit wenigstens eines eine Statorstromänderung in der elektrischen Maschine beschreibenden Messwertes für die Zeitdauer im Freilauf betrieben wird und anschließend über die elektrische Schaltung in einen aktiven Kurzschluss geschaltet wird.

Ein solches adaptives Einstellen der Freilaufzeit in Abhängigkeit eines Parameters erfolgt typischerweise über einen Mikrocontroller des Wechselrichters. Da aber die elektrische Maschine auch bei Ausfall des Mikrocontrollers selbst in einen sicheren Zustand geschaltet werden muss, ist es auch bekannt, in diesem Fall eine Umschaltung über eine reine HardwareSchaltung vorzunehmen. Dabei wird die Zeit bis zum Umschalten für ein Worst-Case-Szenario dimensioniert, sodass die Freilaufzeit sehr gering ist und dadurch die Ströme im aktiven Kurzschluss noch sehr groß sein können. Andererseits ist so sichergestellt, dass trotz Ausfall des Mikrocontrollers und gegebenenfalls verschiedener Messeinrichtungen die elektrische Maschine noch in einem sicheren Betriebszustand überführt werden kann.

Ein Lastabwurf (auch als Load Dump bekannt), also das Öffnen mindestens eines Schaltelementes zwischen Hochvoltbatterie und Wechselrichter, kann verschiedene Gründe haben, beispielsweise ein Crash-Signal oder Messwerte der Hochvoltbatterie. Daher kann der Lastabwurf also dauerhaft oder nur zeitweise sein. Dabei muss auch beim Lastabwurf entsprechend schnell reagiert werden, da ansonsten insbesondere beim Rekuperationsbetrieb große Energiemengen in den Zwischenkreiskondensator zurückgespeist werden, die zu extrem hohen Spannungen führen können. Eine Signalisierung eines bevorstehenden Lastabwurfs (z. B. durch ein Airbag-Steuergerät im Falle eines Crashs oder ein BatteriemanagementSteuergerät) benötigt dabei jedoch einige Zeit, weswegen der geregelte Rekuperationsbetrieb möglicherweise nicht schnell genug verlassen werden kann, um ein kontinuierliches Aufladen des Zwischenkreiskondensators über eine kritische Spannung hinaus zu vermeiden

Der Erfindung liegt das technische Problem zugrunde, eine Schaltungsanordnung zur Ansteuerung eines Wechselrichters für eine Elektromaschine in einem Hochvoltnetz zu schaffen, die bei einem Lastabwurf schnell geeignete Maßnahmen einleitet. Ein weiteres technisches Problem ist die Schaffung eines geeigneten Hochvoltnetzes und ein geeignetes Verfahren zur Ansteuerung eines Wechselrichters zur Verfügung zu stellen.

Die Lösung des technischen Problems ergibt sich durch eine Schaltungsanordnung mit den Merkmalen des Anspruchs 1, ein Hochvoltnetz mit den Merkmalen des Anspruchs 9 und ein Verfahren mit den Merkmalen des Anspruchs 10. Weitere vorteilhafte Ausgestaltungen der Erfindung ergeben sich aus den Unteransprüchen.

Die Schaltungsanordnung zur Ansteuerung eines Wechselrichters für eine Elektromaschine in einem Hochvoltnetz, wobei das Hochvoltnetz mindestens eine Hochvoltbatterie, mindestens einen Zwischenkreiskondensator, mindestens einen Wechselrichter und mindestens ein Schaltelement aufweist, wobei der mindestens eine Zwischenkreiskondensator parallel zu einem Gleichspannungseingang des Wechselrichters angeordnet ist und das Schaltelement zwischen Hochvoltbatterie und Zwischenkreiskondensator angeordnet ist, weist einen Prozessor, einen ersten Komparator und einen zweiten Komparator auf. Der erste Komparator ist derart ausgebildet, ein Schaltsignal für einen aktiven Kurzschluss zu erzeugen, wenn eine Spannung am Zwischenkreiskondensator größer als eine feste Referenzspannung ist. Die feste Referenzspannung ist derart gewählt, dass diese (möglichst knapp) unterhalb von maximal verträglichen Spannungen für die Bauelemente liegt. Der zweite Komparator ist derart ausgebildet, ein Schaltsignal für einen Freilauf zu erzeugen, wenn die Spannung am Zwischenkreiskondensator größer als eine zweite Referenzspannung ist. Die zweite Referenzspannung ist kleiner als die erste Referenzspannung. Weiter ist der Prozessor derart ausgebildet, die zweite Referenzspannung adaptiv mindestens in Abhängigkeit von einem Arbeitspunkt der Elektromaschine anzupassen. Weiter ist die Schaltungsanordnung derart ausgebildet, das Schaltsignal für den Freilauf nur dann durchzuschalten, wenn kein Schaltsignal für den aktiven Kurzschluss vorliegt. Die Schaltungsanordnung ist sehr schnell, da die Komparatoren reine Hardware-Elemente sind. Der Grundgedanke der Erfindung ist, dass sich ein Lastabwurf durch schnelle Spannungsänderungen am Zwischenkreiskondensator detektieren lässt, wobei versucht wird, solange wie möglich im Fall des Lastabwurfs im Freilauf zu bleiben und nur im äußersten Fall (Spannung größer erste Referenzspannung) in den aktiven Kurzschluss zu schalten. Durch die adaptive Anpassung der zweiten Referenzspannung kann ein größerer Spannungsbereich gehandhabt werden, als wenn die zweite Referenzspannung fest eingestellt wäre. Dabei wird die zweite Referenzspannung mindestens in Abhängigkeit eines Arbeitspunktes der Elektromaschine eingestellt. Dabei ist der Prozessor derart ausgebildet, ein mögliches maximales generatives Drehmoment ausgehend vom aktuellen Arbeitspunkt zu ermitteln, womit aus diesem berechneten Drehmoment und einer Drehzahl der Elektromaschine eine mechanische Leistung ermittelt und in eine elektrische Leistung umgerechnet wird. Aus dieser berechneten elektrischen Leistung wird unter Berücksichtigung eines aktuellen Innenwiderstandes und einer aktuellen Leerlaufspannung der Hochvoltbatterie die zweite Referenzspannung ermittelt. Hierdurch kann eine maximale Spannung am Zwischenkreiskondensator abgeschätzt werden, die durch das maximale generative Drehmoment erzeugbar ist. Dieser Spannung ist die Grenze für ein Spannungsband, innerhalb dessen die Schaltungsanordnung von einem regulären Betrieb ausgeht. Hierdurch wird erreicht, dass die Schaltungsanordnung möglichst selten unnötig in den Freilauf schaltet, wobei, wenn dies aber notwendig ist, dieser Schaltvorgang sehr schnell erfolgt. Die Ermittlung des maximalen generativen Drehmoments erfolgt beispielsweise anhand der aktuellen Drehzahl der Elektromaschine. Weiter können Vorgaben von einem Motorsteuergerät und/oder einem Batteriemanagementsteuergerät berücksichtigt werden, die beispielsweise das generative Drehmoment begrenzen, da die Hochvoltbatterie bereits stark geladen ist und/oder die Ladeströme zu groß werden würden. Vorzugsweise geht auch die aktuelle Spannung des Zwischenkreiskondensators in die Ermittlung des maximal möglichen generativen Drehmomentes mit ein.

In einer Ausführungsform ist der Prozessor derart ausgebildet, bei der Umrechnung der mechanischen Leistung in die elektrische Leistung Wandlungsverluste zu berücksichtigen. Dies kann beispielsweise anhand von ermittelten Wirkungsgraden oder mit Hilfe von Verlustkennfeldern erfolgen. Das zulässige Spannungsband wird also etwas reduziert.

In einer weiteren Ausführungsform ist der Prozessor derart ausgebildet, einen maximalen Spannungsrippel im Arbeitspunkt zu ermitteln und bei der Ermittlung der zweiten Referenzspannung zu berücksichtigen. Hierdurch wird das zulässige Spannungsband etwas erweitert. Vorzugsweise werden bei der Ermittlung des maximalen Spannungsrippel die aktuelle Drehzahl und das aktuelle Motormoment sowie die Schaltfrequenz der Leistungshalbleiter des Wechselrichters berücksichtigt. Weiter vorzugsweise wird auch das Modulationsverfahren der Leistungshalbleiter und/oder die Spannung am Zwischenkreiskondensator berücksichtigt.

In einer Ausführungsform weist die Schaltungsanordnung einen dritten Komparator auf, wobei der dritte Komparator ein Schaltsignal für einen Freilauf erzeugt, wenn die Spannung am Zwischenkreiskondensator kleiner als eine dritte Referenzspannung ist. Die dritte Referenzspannung kann derart gewählt werden, dass bei dieser kein ordnungsgemäßer Betrieb des Wechselrichters mehr möglich ist. Hierdurch werden Fälle abgefangen, wo der Wechselrichter im motorischen Betrieb ist und durch den Lastabfall die gesamte Energie aus dem Zwischenkreiskondensator kommen muss, der sich dann entsprechend schnell entlädt.

In einer weiteren Ausführungsform ist die dritte Referenzspannung eine feste Referenzspannung.

In einer weiteren Ausführungsform weist der Prozessor eingangsseitig einen Tiefpassfilter auf, so dass die Spannungssignale vom Zwischenkreiskondensator geglättet bzw. gemittelt werden, so dass hochfrequente bzw. höherfrequente Schwankungen bei der Bildung der zweiten Referenzspannung unterdrückt werden.

In einer weiteren Ausführungsform ist der Prozessor über eine SPI-Schnittstelle (Serial Peripheral Interface) mit dem zweiten Komparator verbunden, die sehr schnell und robust ist.

In einer weiteren Ausführungsform weist die Schaltungsanordnung eine Überstromerkennung für Phasenströme der Elektromaschine auf, wobei die Überstromerkennung derart ausgebildet ist, bei einem erfassten Überstrom ein Schaltsignal für einen Freilauf zu erzeugen.

In einer weiteren Ausführungsform ist die Überstromerkennung derart ausgebildet, nach einer vorgegebenen Zeit nach Erzeugung des Schaltsignals für den Freilauf ein Schaltsignal für den aktiven Kurzschluss zu erzeugen. Diese Ausführungsform kommt insbesondere zur Anwendung, wenn die Elektromaschine als permanent erregte Synchronmaschine ausgebildet ist, wo letztendlich der aktive Kurzschluss der sichere Zustand ist. Hierzu startet beispielsweise das Schaltsignal einen Timer, der nach Ablauf der vorgegebenen Zeit (z.B. nach ca. 500 $\mu$s) ein Schaltsignal für den aktiven Kurzschluss erzeugt.

Das Hochvoltnetz umfasst eine Hochvoltbatterie, mindestens einen Zwischenkreiskondensator, mindestens einen Wechselrichter, mindestens eine Elektromaschine und mindestens ein Schaltelement, wobei der mindestens eine Zwischenkreiskondensator parallel zu einem Gleichspannungseingang des Wechselrichters angeordnet ist und das Schaltelement zwischen der Hochvoltbatterie und dem Zwischenkreiskondensator angeordnet ist, wobei das Hochvoltnetz mindestens eine zuvor beschriebene Schaltungsanordnung zur Ansteuerung des Wechselrichters aufweist. Die Elektromaschine ist vorzugsweise eine Synchronmaschine.

Das Verfahren zur Ansteuerung eines Wechselrichters erfolgt mittels einer zuvor beschriebenen Schaltungsanordnung, wobei bei einem Last-Abwurf durch Öffnung des mindestens einen Schaltelementes die Schaltungsanordnung ein Schaltsignal für einen aktiven Kurzschluss oder einen Freilauf erzeugt.

Die Erfindung wird nachfolgend anhand eines bevorzugten Ausführungsbeispieles näher erläutert. Die Figuren zeigen:

Fig. 1 ein schematisches Blockschaltbild eines Hochvoltnetzes,

Fig. 2 eine schematische Darstellung einer Schaltungsanordnung zur Ansteuerung eines Wechselrichters,

Fig. 3 eine schematische Darstellung eines Drehmomentes der Elektromaschine über der Drehzahl,

Fig. 4 ein schematisches Blockschaltbild zur Ermittlung der zweiten Referenzspannung und

Fig. 5 ein schematisches Ersatzschaltbild zur Erläuterung der Ermittlung der maximalen Spannung am Zwischenkreiskondensator.

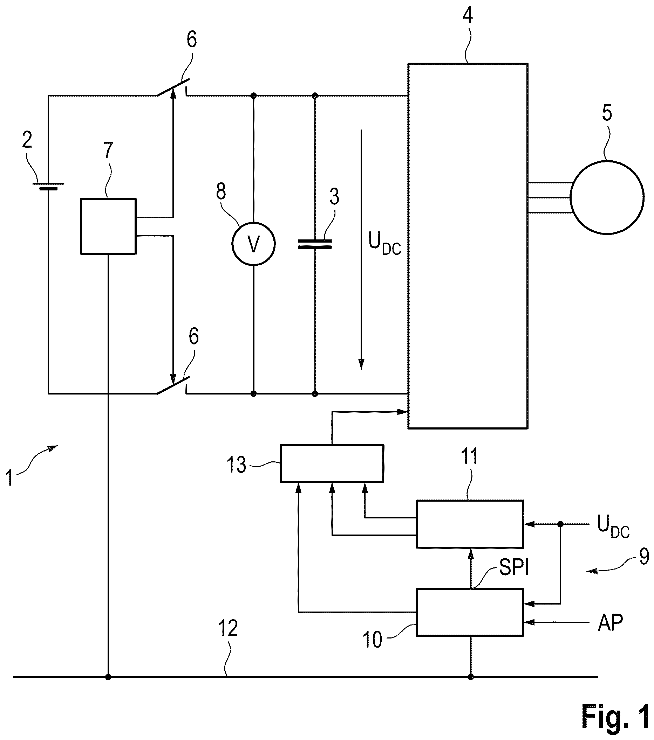

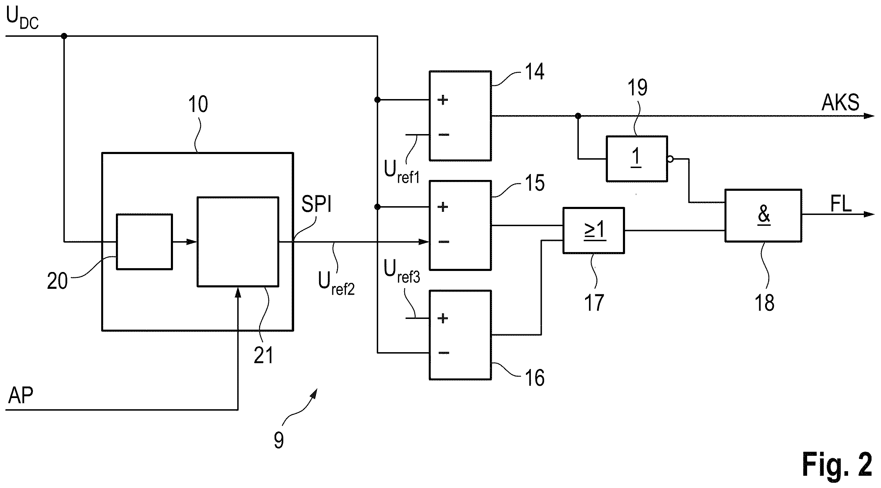

In der Fig. 1 ist schematisch ein Hochvoltnetz 1 eines Kraftfahrzeuges dargestellt. Das Hochvoltnetz 1 weist eine Hochvoltbatterie 2, einen Zwischenkreiskondensator 3, einen Wechselrichter 4 und eine Elektromaschine 5 auf. Der Zwischenkreiskondensator 3 ist parallel zu einem Gleichspannungseingang des Wechselrichters 4 angeordnet, wobei an dessen Wechselspannungsausgang die Elektromaschine 5 angeordnet ist. Zwischen der Hochvoltbatterie 2 und dem Zwischenkreiskondensator 3 sind zwei Schaltelemente 6 angeordnet, mittels derer die Hochvoltbatterie 2 allpolig vom übrigen Hochvoltnetz getrennt werden kann. Die Schaltelemente 6 sind beispielsweise als Schütze ausgebildet, können aber auch Halbleiterschalter sein. Weiter dargestellt ist ein Batteriemanagement-Steuergerät 7, das unter anderem die Schaltelemente 6 ansteuert. Dem Zwischenkreiskondensator 3 ist eine Spannungsmesseinrichtung 8 zugeordnet. Weiter weist das Hochvoltnetz 1 eine Schaltungsanordnung 9 zur Ansteuerung des Wechselrichters 4 auf. Die Schaltungsanordnung 9 weist einen Prozessor 10 und eine Hardwareschaltung 11 auf. Der Prozessor 10 ist vorzugsweise ein Mikroprozessor, der über ein Bussystem 12 unter anderem mit einem Antriebssteuergerät und/oder dem Batteriemanagement-Steuergerät 7 verbunden ist. Der Prozessor 10 erzeugt im regulären Betrieb in Abhängigkeit von gewünschten Arbeitspunkten AP der Elektromaschine 5 Steuersignale für Gate-Treiber 13, die dann nicht dargestellte Leistungshalbleiter des Wechselrichters 4 ansteuern. Im Fall eines Lastabwurfs durch Öffnung der Schaltelemente 6 erzeugt hingegen die Hardwareschaltung 11 ein Signal für einen aktiven Kurzschluss AKS oder einen Freilauf FL, der von den Gate-Treibern 13 oder einer anderen Schaltung umgesetzt wird. Dabei sind der Prozessor 10 und die Hardwareschaltung 11 über eine SPI-Schnittstelle SPI miteinander verbunden. Die Funktionsweise der Schaltungsanordnung 9 für den Lastabwurf soll nun anhand von Fig. 2 erläutert werden. Dabei ist in Fig. 2 der Prozessor 10 und die Hardwareschaltung 11 dargestellt.

Die Hardwareschaltung 11 umfasst einen ersten Komparator 14, einen zweiten Komparator 15 und einen dritten Komparator 16. Die Ausgänge des zweiten Komparators 15 und des dritten Komparators 16 sind auf ein Oder-Gatter 17 geführt. Dabei weisen die Ausgänge der Komparatoren 14-16 eine Haltefunktion auf (z.B. mittels Latch-Gatters), um sicherzustellen, dass bei einem Absinken der Spannung $U_{DC}$ am Zwischenkreiskondensator das Signal für den aktiven Kurzschluss oder den Freilauf nicht gelöscht wird, sondern der aktive Kurzschluss oder der Freilauf aufrechterhalten bleiben. Der Ausgang des Oder-Gatters 17 ist auf einen Eingang eines Und-Gatters 18 geführt. An dem anderen Eingang des Und-Gatters 18 liegt der über einen Inverter 19 invertierte Ausgang des ersten Komparators 14 an. Am ersten Komparator 14 und am zweiten Komparator 15 liegt jeweils die Spannung $U_{DC}$ am Zwischenkreiskondensator 3 an dem positiven Eingang an, wobei am negativen Eingang eine erste Referenzspannung $U_{ref1}$ bzw. eine zweite Referenzspannung $U_{ref2}$ anliegt. Am positiven Eingang des dritten Komparators 16 liegt eine dritte Referenzspannung $U_{ref3}$ an und am negativen Eingang liegt die Spannung $U_{DC}$ am Zwischenkreiskondensator 3 an.

Der Prozessor 10 weist eingangsseitig einen Tiefpassfilter 20 für die Spannung $U_{DC}$ auf, dem eine Berechnungseinheit 21 nachgeschaltet ist, die die zweite Referenzspannung $U_{ref2}$ dynamisch in Abhängigkeit der gefilterten Spannung $U_{DC}$ und einem Arbeitspunkt AP der Elektromaschine 5 ermittelt. Dabei wird die zweite Referenzspannung $U_{ref2}$ derart festgelegt, dass diese größer ist als die maximal mögliche Spannung $U_{DC}$ am Zwischenkreiskondensator 3 aufgrund des maximal möglichen generativen Drehmoments, was noch näher erläutert wird.

Die erste Referenzspannung $U_{ref1}$ und die dritte Referenzspannung $U_{ref3}$ sind hingegen fest.

Im Lastabwurf sind nun prinzipiell zwei Fälle zu unterscheiden, nämlich dass die Elektromaschine 5 im Rekuperationsbetrieb oder motorischen Betrieb ist. Im Rekuperationsbetrieb kann die Spannung $U_{DC}$ am Zwischenkreiskondensator 3 schnell und stark ansteigen, da die Energie aufgrund der offenen Schaltelemente 6 nicht von der Hochvoltbatterie 2 aufgenommen werden kann. Als Folge übersteigt die Spannung $U_{DC}$ die zweite Referenzspannung $U_{ref2}$ und am Ausgang des zweiten Komparators 15 wird eine logische 1 erzeugt, die auch am Ausgang des Oder-Gatters 17 anliegt. Solange die Spannung $U_{DC}$ die erste Referenzspannung $U_{ref1}$ übersteigt, liegt am Ausgang des ersten Komparators 14 eine logische 0 an, die über den Inverter 19 invertiert wird, so dass am Eingang des Und-Gatters 18 zwei logische 1en anliegen und am Ausgang des Und-Gatters eine logische 1 für ein Freilaufsignal FL erzeugt wird. Entsprechend wird der Wechselrichter 4 in den Freilauf geschaltet. Sollte die Spannung $U_{DC}$ weiter steigen und die erste Referenzspannung $U_{ref1}$ überschreiten, so erzeugt der erste Komparator 14 am Ausgang eine logische 1 und es wird ein Signal für einen aktiven Kurzschluss AKS erzeugt. Der Inverter 19 invertiert dieses Signal, so dass am Und-Gatter 18 eine logische 0 anliegt, so dass auch am Ausgang eine logische 0 ist und kein Freilaufsignal FL mehr erzeugt wird. Somit wird verhindert, dass gleichzeitig ein Signal für einen aktiven Kurzschluss AKS und ein Signal für einen Freilauf FL anliegen. Wenn der Wechselrichter 4 einmal in den aktiven Kurzschluss geschaltet wurde, so verbleibt dieser in diesem Zustand, bis über ein Initialisierungssignal dieser Zustand zurückgesetzt wird. Im motorischen Betrieb der Elektromaschine 5 wird die gesamte Energie vom Zwischenkreiskondensator 3 zur Verfügung gestellt, so dass die Spannung $U_{DC}$ schnell sinkt. Unterschreitet dann die Spannung $U_{DC}$ die dritte Referenzspannung $U_{ref3}$, so wird ein Signal für den Freilauf FL erzeugt. Die drei Komparatoren 14 - 16 können dabei auch in einem gemeinsamen Chip untergebracht werden.

Weiter kann die Schaltungsanordnung 9 eine nicht dargestellte Überstromerkennung für die Phasenströme der Elektromaschine 5 aufweisen. Erkennt dann die Überstromerkennung einen Überstrom, so erzeugt diese ein Schaltsignal für einen Freilauf FL. Hierzu ist der Ausgang der Überstromerkennung mit einem Eingang des Oder-Gatters 17 verbunden. Ist die Elektromaschine 5 als permanent erregte Synchronmaschine ausgebildet, wird vorzugsweise ein Timer gestartet, wobei nach Ablauf des Timers ein Schaltsignal für einen aktiven Kurzschluss AKS erzeugt wird. Hierzu sind dann beispielsweise der Ausgang des Timers und der Ausgang des ersten Komparators 14 über ein Oder-Gatter miteinander verknüpft.

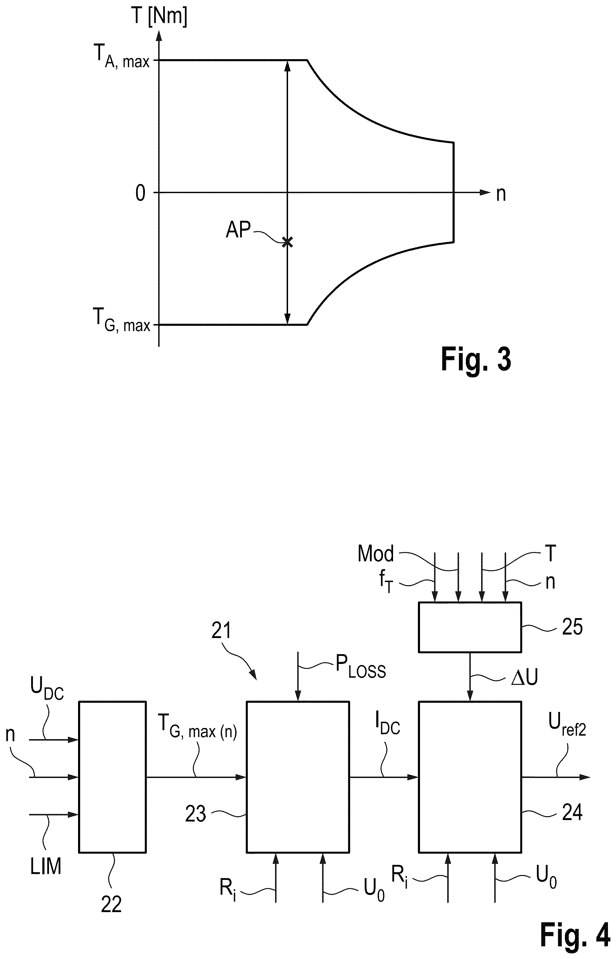

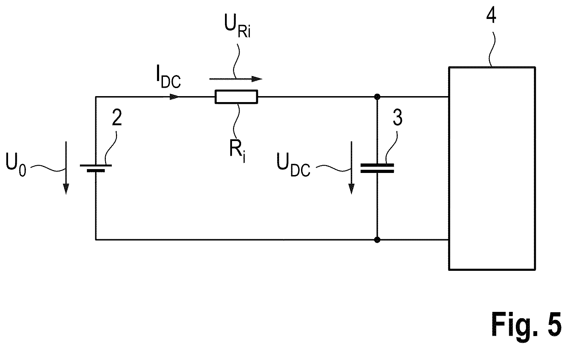

Anhand der Fig. 3 bis Fig. 5 soll nun die adaptive Berechnung der zweiten Referenzspannung $U_{ref2}$ näher erläutert werden. Dabei ist in Fig. 3 schematisch ein Arbeitspunkt AP eingezeichnet, wobei das Drehmoment T in Nm über der Drehzahl n der Elektromaschine 5 dargestellt ist. Eine umrichtergesteuerte Elektromaschine 5 wird immer innerhalb der physischen Grenzen des Systems betrieben. Die Systemgrenzen können mit einem äquivalenten Drehzahl-Drehmoment-Kennfeld beschrieben werden. Einem Arbeitspunkt AP innerhalb des Kennfeldes kann immer eine Gleichspannung und ein Gleichstrom an den Gleichspannungseingängen des Wechselrichters zugeordnet werden. Weiterhin beeinflussen der Ladezustand (SOC) der Hochvoltbatterie und der Innenwiderstand der Hochvoltbatterie sowie die Leitungswiderstände die genannten Parameter, insbesondere den Gleichstrom und die Gleichspannung an dem Gleichspannungseingängen des Wechselrichters, die dazu noch abhängig von der Temperatur sind. Unter der Annahme, dass das physikalische System eine Trägheit aufweist und sich deshalb die Drehzahl n nicht sprunghaft ändern kann, kann sich der Arbeitspunkt AP nur entlang der eingezeichneten vertikalen Linie (Drehmoment T) im Kennfeld schnell ändern. Das maximale Antriebsmoment $T_{s,max}$ und das maximale generative Drehmoment $T_{G,max}$, welches ausgehend von einem beliebigen Arbeitspunkt AP eingeregelt werden kann, ist abhängig von den physikalischen Systemgrenzen, des Ladezustandes der Hochvoltbatterie, eventuellen Temperatur-Deratings und eventuellen Strom- und Leistungslimitierungen, welche beispielsweise durch das Antriebssteuergerät kommuniziert werden. Innerhalb dieser Grenzen kann sich das Drehmoment T jedoch annähernd sprunghaft ändern, weswegen sich auch die Spannung und der Strom quasi sprunghaft am Wechselrichter ändern können. D.h., um jeden Arbeitspunkt AP kann ein Spannungsband gelegt werden, in welchem sich dieser Arbeitspunkt AP durch dynamisches Fahrverhalten frei bewegen kann. Eine Über- bzw. Unterschreitung dieses Spannungsbandes kann dementsprechend nur durch einen Systemfehler, insbesondere durch einen Load Dump, hervorgerufen werden.

Dieses Spannungsband wird nun in der Berechnungseinheit 21 kontinuierlich ermittelt, wobei insbesondere das maximale generative Drehmoment $T_{G,max}$ wichtig ist. Die Berechnungseinheit 21 weist eine Einrichtung 22 auf, die das maximale generative Drehmoment $T_{G,max}$ bestimmt. Hierzu erhält die Einrichtung 22 mindestens die Drehzahl n, die Spannung $U_{DC}$ am Zwischenkreiskondensator und verschiedene, möglicherweise wirksame, Beschränkungen LIM von einem Antriebssteuergerät (z.B. Strom- und Leistungsbeschränkungen). Dieses ermittelte maximale generative Drehmoment $T_{G,max}$ in Abhängigkeit von der aktuellen Drehzahl n wird an eine Einheit 23 übergeben. Aus dem maximalen generativen Drehmoment $T_{G,max}$ und der Drehzahl n kann eine maximale mechanische Leistung an der Welle der Elektromaschine berechnet werden. Diese mechanische Leistung kann zunächst in eine elektrische Leistung umgerechnet werden, die am Gleichspannungseingang des Wechselrichters fließt. Von der elektrischen Leistung werden dann noch Verluste $P_{LOSS}$ abgezogen, die im Wechselrichter und der Elektromaschine auftreten. Mit Hilfe eines aktuellen Innenwiderstandes $R_i$ der Hochvoltbatterie und der aktuellen Ruhespannung $U_0$ der Hochvoltbatterie kann dann ein Strom $I_{DC}$ an den Gleichstromklemmen des Wechselrichters bestimmt werden. In einer Einheit 24 wird dann der Strom $I_{DC}$ in eine Spannung $U_{DC}$ am Zwischenkreiskondensator berechnet, wobei auf den Wert der Spannung $U_{DC}$ noch ein maximaler Spannungsrippel $\Delta U$ aufaddiert wird, wobei dann das Ergebnis die zweite Referenzspannung $U_{ref2}$ ist, die laufend aktuell ermittelt wird. Der maximal mögliche Spannungsrippel $\Delta U$ wird in einer Einheit 25 unter Berücksichtigung der Drehzahl n, des aktuellen Drehmoments T, der Schaltfrequenz $f_T$ und dem verwendeten Modulationsverfahren Mod ermittelt.

Anhand des Ersatzschaltbildes mit dem Innenwiderstand $R_i$ der Hochvoltbatterie 2 soll eine mögliche Ermittlung des Innenwiderstandes $R_i$ und der Leerlaufspannung $U_0$ kurz erläutert werden, wobei die Bestimmung von $R_i$, $U_0$ wiederholt erfolgt. Dabei erfolgt die Bestimmung von $R_i$ und $U_0$ vorzugsweise mittels zweier Messpaare von $U_{DC}$ und $I_{DC}$, wobei die Zeit zwischen den beiden Messungen möglichst kurz ist (z.B. im Millisekundenbereich, z.B. 10 ms bis 1 s)., sodass sich weder der SOC der Hochvoltbatterie 2 noch die Temperatur geändert haben. Dann kann sich $R_i$ und $U_0$ wie folgt bestimmen:

$$U_0 = R_i \cdot I_{DC} + U_{DC}$$

$$R_i \cdot I_{DC,1} + U_{DC,1} = R_i \cdot I_{DC,2} + U_{DC,2}$$

$$R_i = \frac{U_{DC,2} - U_{DC,1}}{I_{DC,1} - I_{DC,2}}$$

$$U_0 = I_{DC,1} \cdot \frac{U_{DC,2} - U_{DC,1}}{I_{DC,1} - I_{DC,2}} + U_{DC,1}$$

Mit der verlustbereinigten ermittelten elektrischen Leistung $P_{DC}$ gilt:

$$U_0 \cdot I_{DC} = R_i I_{DC}^2 + P_{DC}$$

$$\Rightarrow \quad I_{DC} = \frac{U_0 - \sqrt{U_0^2 - 4R_i P_{DC}}}{2R_i}$$

Durch Einsetzen in die oberste Gleichung kann $U_{DC} = U_0 - R_i \cdot I_{DC}$ ermittelt werden.

Bezugszeichenliste

| 1 | Hochvoltnetz |
|---|---|
| 2 | Hochvoltbatterie |
| 3 | Zwischenkreiskondensator |
| 4 | Wechselrichter |
| 5 | Elektromaschine |
| 6 | Schaltelemente |
| 7 | Batteriemanagement-Steuergerät |
| 8 | Spannungsmesseinrichtung |
| 9 | Schaltungsanordnung |
| 10 | Prozessor |
| 11 | Hardwareschaltung |
| 12 | Bussystem |
| 13 | Gate-Treiber |
| 14 | Komparator |
| 15 | Komparator |
| 16 | Komparator |
| 17 | Oder-Gatter |

| 18 | Und-Gatter |
|---|---|
| 19 | Inverter |
| 20 | Tiefpassfilter |
| 21 | Berechnungseinheit |
| 22 | Einheit |
| 23 | Einheit |
| 24 | Einheit |
| 25 | Einheit |
| AKS | aktiver Kurzschluss |
| AP | Arbeitspunkt |
| FL | Freilauf |
| $f_T$ | Schaltfrequenz |
| $I_{DC}$ | Strom |
| $P_{DC}$ | elektrische Leistung |
| $P_{LOSS}$ | Wandlungsverlust |
| $R_i$ | Innenwiderstand |
| SPI | SPI-Schnittstelle |
| T | Drehmoment |
| $T_{A,max}$ | maximale Antriebsdrehmoment |
| $T_{G,max}$ | maximales generatives Drehmoment |
| $U_0$ | Ruhespannung |
| $U_{DC}$ | Spannung |
| $U_{ref1}$ | Referenzspannung |
| $U_{ref2}$ | Referenzspannung |
| $U_{ref3}$ | Referenzspannung |
| $\Delta U$ | Spannungsrippel |

**Patentansprüche**

1. Schaltungsanordnung (9) zur Ansteuerung eines Wechselrichters (4) für eine Elektromaschine (5) in einem Hochvoltnetz (1), wobei das Hochvoltnetz (1) mindestens eine Hochvoltbatterie (2), mindestens einen Zwischenkreiskondensator (3), mindestens einen Wechselrichter (4) und mindestens ein Schaltelement (6) aufweist, wobei der mindestens eine Zwischenkreiskondensator (3) parallel zu einem Gleichspannungseingang des Wechselrichters (4) angeordnet ist und das Schaltelement (6) zwischen Hochvoltbatterie (2) und Zwischenkreiskondensator (3) angeordnet ist, wobei die Schaltungsanordnung (9) einen Prozessor (10), einen ersten Komparator (14) und einen zweiten Komparator (15) aufweist, wobei der erste Komparator (14) ein Schaltsignal für einen aktiven Kurzschluss (AKS) erzeugt, wenn eine Spannung ($U_{DC}$) am Zwischenkreiskondensator (3) größer als eine feste erste Referenzspannung ($U_{ref1}$) ist, wobei zweite Komparator (15) ein Schaltsignal für einen Freilauf (FL) erzeugt, wenn die Spannung ($U_{DC}$) am Zwischenkreiskondensator (3) größer als eine zweite Referenzspannung ($U_{ref2}$) ist, wobei der Prozessor (10) derart ausgebildet ist, die zweite Referenzspannung ($U_{ref2}$) adaptiv mindestens in Abhängigkeit der eines Arbeitspunktes (AP) der Elektromaschine (5) anzupassen, wobei die Schaltungsanordnung (9) weiter derart ausgebildet ist, das Schaltsignal für den Freilauf (FL) nur dann durchzuschalten, wenn kein Schaltsignal für den aktiven Kurzschluss (AKS) vorliegt, wobei der Prozessor (10) derart ausgebildet ist, ein mögliches maximales generatives Drehmoment ($T_{G,max}$) ausgehend vom aktuellen Arbeitspunkt (AP) zu ermitteln, wobei aus dem Drehmoment ($T_{G,max}$) und einer Drehzahl (n) der Elektromaschine (5) eine mechanische Leistung ermittelt und in eine elektrische Leistung ($P_{DC}$) umgerechnet wird, die am Zwischenkreiskondensator (3) erzeugt wird, wobei aus der elektrischen Leistung ($P_{DC}$) unter Berücksichtigung eines aktuellen Innenwiderstandes ($R_i$) und einer aktuellen Leerlaufspannung ($U_0$) der Hochvoltbatterie (2) die zweite Referenzspannung ($U_{ref2}$) ermittelt wird.

2. Schaltungsanordnung nach Anspruch 1, **dadurch gekennzeichnet, dass** der Prozessor (10) derart ausgebildet ist, bei der Umrechnung der mechanischen Leistung in die elektrische Leistung ($P_{DC}$) Wandlungsverluste ($P_{LOSS}$) zu berücksichtigen.

3. Schaltungsanordnung nach Anspruch 1 oder 2, **dadurch gekennzeichnet, dass** der Prozessor (10) derart ausgebildet ist, einen maximalen Spannungsrippel ($\Delta U$) im Arbeitspunkt (AP) zu ermitteln und bei der Ermittlung der zweiten Referenzspannung ($U_{ref2}$) zu berücksichtigen.

4. Schaltungsanordnung nach einem der vorangegangenen Ansprüche, **dadurch gekennzeichnet, dass** die Schaltungsanordnung (9) einen dritten Komparator (16) aufweist, wobei der dritte Komparator (16) ein Schaltsignal für einen Freilauf (FL) erzeugt, wenn die Spannung ($U_{DC}$) am Zwischenkreiskondensator (3) kleiner als eine dritte Referenzspannung ($U_{ref3}$) ist.

5. Schaltungsanordnung nach Anspruch 4, **dadurch gekennzeichnet, dass** die dritte Referenzspannung ($U_{ref3}$) eine feste Referenzspannung ist.

6. Schaltungsanordnung nach einem der vorangegangenen Ansprüche, **dadurch gekennzeichnet, dass** die Schaltungsanordnung eine Überstromerkennung für Phasenströme der Elektromaschine (5) aufweist, wobei die Überstromerkennung derart ausgebildet ist, bei einem erfassten Überstrom ein Schaltsignal für einen Freilauf (FL) zu erzeugen.

7. Schaltungsanordnung nach Anspruch 6, **dadurch gekennzeichnet, dass** die Überstromerkennung derart ausgebildet ist, nach einer vorgegebenen Zeit nach Erzeugung des Schaltsignals für den Freilauf (FL) ein Schaltsignal für den aktiven Kurzschluss (AKS) zu erzeugen.

8. Schaltungsanordnung nach einem der vorangegangenen Ansprüche, **dadurch gekennzeichnet, dass** der Prozessor (10) über eine SPI-Schnittstelle (SPI) mit dem zweiten Komparator (15) verbunden ist.

9. Hochvoltnetz (1), umfassend mindestens eine Hochvoltbatterie (2), mindestens einen Zwischenkreiskondensator (3), mindestens einen Wechselrichter (4), mindestens eine Elektromaschine (5) und mindestens ein Schaltelement (6), wobei der mindestens eine Zwischenkreiskondensator (3) parallel zu einem Gleichspannungseingang des Wechselrichters (4) angeordnet ist und das Schaltelement (6) zwischen der Hochvoltbatterie (2) und dem Zwischenkreiskondensator (3) angeordnet ist, wobei das Hochvoltnetz (1) mindestens eine Schaltungsanordnung (9) zur Ansteuerung des Wechselrichters (4) nach einem der Ansprüche 1 bis 8 aufweist.

10. Verfahren zur Ansteuerung eines Wechselrichters (4) mittels einer Schaltungsanordnung nach einem der Ansprüche 1 bis 8, wobei bei einem Lastabwurf durch Öffnung des mindestens einen Schaltelementes (6) die Schaltungsanordnung (9) ein Schaltsignal für einen aktiven Kurzschluss (AKS) oder einen Freilauf (FL) erzeugt.

**Fig. 1**

Fig. 2

EP 4 783 450 A1

**Fig. 3**

**Fig. 4**

Fig. 5

EUROPÄISCHER RECHERCHENBERICHT

Nummer der Anmeldung

EP 26 15 2773

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 501 876 A1 (VALEO SIEMENS EAUTOMOTIVE GERMANY GMBH [DE]) 26. Juni 2019 (2019-06-26) * Absatz [0026]; Abbildung 1 * ----- | 1-10 | INV. H02P3/22 B60L7/18 H02P6/24 H02P21/36 |
| A | EP 3 473 483 A1 (VALEO SIEMENS EAUTOMOTIVE GERMANY GMBH [DE] ET AL.) 24. April 2019 (2019-04-24) * das ganze Dokument * ----- | 1-10 | |
| A | DE 10 2013 112678 A1 (PORSCHE AG [DE]) 21. Mai 2015 (2015-05-21) * Absatz [0056]; Abbildung 9 * ----- | 1-10 | |
| A | CN 219 678 340 U (GUANGZHOU XPENG AUTOMOBILE TECH CO LTD) 12. September 2023 (2023-09-12) * Absatz [0103] * ----- | 1-10 | |
| A | DE 11 2015 004320 T5 (AISIN AW CO [JP]) 27. Juli 2017 (2017-07-27) * Absatz [0059] * ----- | 1-10 | RECHERCHIERTE SACHGEBIETE (IPC) |
| A | FR 3 134 253 A1 (NIDEC PSA EMOTORS [FR]) 6. Oktober 2023 (2023-10-06) * Abbildung 2 * ----- | 1-10 | H02P B60L |

Der vorliegende Recherchenbericht wurde für alle Patentansprüche erstellt

| Recherchenort | Abschlußdatum der Recherche | Prüfer |
|---|---|---|
| München | 8. Juni 2026 | Schneider, Gernot |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 26 15 2773

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2026

| Im Recherchenbericht angeführtes Patentdokument | Datum der Veröffentlichung | Mitglied(er) der Patentfamilie | Datum der Veröffentlichung |
|---|---|---|---|
| EP 3501876 A1 | 26-06-2019 | CN 111095762 A<br>EP 3501876 A1<br>WO 2019121917 A1 | 01-05-2020<br>26-06-2019<br>27-06-2019 |
| EP 3473483 A1 | 24-04-2019 | KEINE | |
| DE 102013112678 A1 | 21-05-2015 | KEINE | |
| CN 219678340 U | 12-09-2023 | KEINE | |
| DE 112015004320 T5 | 27-07-2017 | CN 107112937 A<br>CN 110098779 A<br>DE 112015004320 T5<br>JP 6296169 B2<br>JP WO2016076429 A1<br>US 2017305274 A1<br>WO 2016076429 A1 | 29-08-2017<br>06-08-2019<br>27-07-2017<br>20-03-2018<br>01-06-2017<br>26-10-2017<br>19-05-2016 |
| FR 3134253 A1 | 06-10-2023 | FR 3134253 A1<br>US 2025112453 A1<br>WO 2023187274 A1 | 06-10-2023<br>03-04-2025<br>05-10-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014209887 A1
- DE 102013226560 A1
- DE 102021129144 A1